# EUROPEAN PATENT SPECIFICATION

(11) **EP 1 778 314 B1**
(45) Date of publication and mention of the grant of the patent: **26.11.2008**
(21) Application number: 04741848.8
(22) Date of filing: 21.06.2004
(51) Int. Cl.: A61M 1/16

(54) **METHOD OF ACTIVATING MEMBRANES**
VERFAHREN ZUR AKTIVIERUNG VON MEMBRANEN
PROCEDE D'ACTIVATION DE MEMBRANES

(43) Date of publication of application: 02.05.2007
(73) Proprietor: ECOLAB INC., St. Paul MN 55102-2233 (US)
(72) Inventor: KNOP, Ralf-Erbo, 40724 Hilden (DE); STEIN, Markus, 40595 Düsseldorf (DE); KRACK, Ralf, 40237 Düsseldorf (DE)
(74) Representative: Polypatent
(86) International application number: PCT/EP2004/051180
(87) International publication number: WO 2005/123157

(56) References cited:
- DE-A- 10 257 390
- GB-A- 2 124 199
- US-A- 4 144 185
- US-A- 4 357 254

## Description

The present invention is directed to the use of a liquid activation agent for activating membranes.

It is well known in the art that liquids can be cleaned by various separation methods using filtration units. Such separation methods are, for instance, the micro-filtration, ultra-filtration, nano-filtration or the reverse osmosis. The term "separation process" as used herein means the separation of substances as well as the concentration of substances by separating the substance for example from water or other solvents All of these separation methods have in common that membranes are used. The function of the separation units might be to substantially remove substances present in a liquid media, so that the obtained cleaned liquid media can be reused.

The function of such separation units which are commonly referred to as filtration units is, in the first place, to remove mineral, organic or microbiological impurities. The liquid media such as an aqueous media is filtered according to the requirements. The industrial filtration units are normally in operation for several days, weeks or even months before being cleaned or overhauled. Depending on the type of filtration unit and the nature of the aqueous medium to be filtered, the performance of the filtration units deteriorate with time. This can be reflected, for example, in the fact that the differential pressure between the inflow and outflow side of the filtration unit is increased with the effect that the materials used in the filtration unit are subjected to greater mechanical stress and, thus, an accelerated wear. As the operation of the filtration unit continues, blockages can occur to the point where the filtration unit is brought to a stand still. The reduction in the performance of the filtration units can be due to several reasons. For example, in the water conditioning field experts are often speaking of the formation of bio-films in membranes units, so called bio-fouling.

In order to reduce the bio-fouling of membranes the international application WO 01/10218 discloses to dose a component selected from the group of nitrogen and phosphorous compounds to the aqueous media passing through the filtration unit. Such a treatment securely prevents the formation of bio-films

With respect to the recycling of waste water of washing machines by reverse osmosis document EP 0 873 388 B1 suggests to use a specific liquid or pasty combination of surfactants. Said specific surfactants solve the technical problem of achieving a substantially comparable cleaning performance, whereby additionally the waste water treatment via membranes is not detrimentally effected by the detergents used for washing. Commonly used detergents result in a very fast blocking of the reverse osmosis membranes used, so that the flow of the waste water to be cleaned through the membrane is not acceptable. Consequently, the membrane used has to be cleaned very often and in case such membrane can not be cleaned it has to be changed

The international application PCT/EP03/12365, published after the application date of the present invention, refers to acidic solids which can be used for cleaning membranes. Such an acidic cleaner block contains the components citric acid and one or more acids selected from adipic, succinic and glutaric acid. Membranes are cleaned with said acidic solid, whereby the cleaner block is diluted in water and said obtained diluted aqueous composition is brought into contact with the membranes to be cleaned. Although it is not explicitly mentioned in said application it is of general knowledge to a person skilled in the art that the membrane is contacted with said aqueous cleaning composition for a time period approximately from 1 minute to 30 minutes. Since the membranes to be cleaned are not removed from the filter systems of the waste water treatment device the period of time in which the membranes are contacted with said aqueous composition is very short. Otherwise the standstill of the cleaning device is too long and involves further costs.
GB 2 124 199 describes processes for improving the performance of particulate and other types of water-treatment solids, such as filter membranes which are fouled with organic contaminants.

Accordingly the problem dealt with in the invention is to provide a use of a liquid activating agent for activating membranes useful in separation processes, whereby the drop of performance per time of the membrane when used is reduced. Another object of the present invention is to provide membranes which, when cleaned, have an improved performance compared with untreated membranes which have been cleaned. Additionally the dwelling time of the membranes should be increased so that said membranes can be used for a longer period of time without having to be replaced.

The technical problem underlying the present invention is solved by the use according to the claims.

The term "membrane" used in the present application refers to all kind of membranes used in separation processes known to a person skilled in the art. Moreover, the membrane can be supported by further support members such as a support fabric. Said support members are not limited. Moreover, the geometry of the membrane is not limited. All geometry known to a person skilled in the art can be used. One specific type of membranes used is a spiral wound membrane. Moreover, it is possible to combine one or more membranes in a so called loop and that two or more loops are combined to form a module. The module is then used in the separation device.

In a preferred embodiment the membrane is a micro-filtration membrane, an ultra-filtration membrane, a nano-filtration membrane or a reverse osmosis membrane. The type of membrane depends on the pore size of the membrane. It is of general knowledge to a person skilled in the art, that the pore size has to be selected with respect to the type of compounds which should be separated from the liquid by means of the separation process. Reverse osmosis uses the tightest possible membrane in a liquid separation. In principle, water is the only material that can permeate the membrane. All other materials, such as salts, sugars etc. will be unable or nearly unable to pass through the reverse osmosis membrane.

Nano-filtration as a separation process is not as fine as reverse osmosis and uses membranes which are slightly more open. Furthermore nano-filtration allows small ions to pass through, while excluding larger ions and most organic components.

In contrast to nano-filtration, ultra-filtration involves the use of membranes in which the pores are larger and the pressure is relatively low. Salts, sugars, organic acids and smaller peptides, for instance, are allowed to pass, while proteins, fats and polysaccharides are not allowed to pass through the ultra-filtration membrane. In the micro-filtration process, suspended solids, bacteria and fat globules are normally the only substances which are not allowed to pass through. Thus, the pores of a micro-filtration membrane are larger than the pores of an ultra-filtration membrane.

All of these specific filtration methods have in common that they are physical separation processes in which the driving force is the difference in pressure between two sides of the special membrane. All of these processes are characterized by the ability to separate molecules by different sizes and characteristics.

The industrial membrane filtration is normally carried out as a cross-flow filtration, whereby the liquid being filtered flows parallel to the membrane at high velocity and under pressure. In contrast thereto, with the dead-end filtration the liquid to be filtered flows vertically to the membrane, whereby the substances held by the membrane form a filter cake. As a consequence of the filter cake formed the flow through the membrane will decrease more, compared with the cross-flow filtration.

In a preferred embodiment the membrane has pore sizes of from 0.01 nm to 1000 nm. It is of general knowledge to a person skilled in the art as mentioned above that the pore sizes of membranes depend on the specific membranes used. For instance, in a preferred embodiment of the present invention the reverse osmosis membrane has a pore size of approximately 0.01 nm to 1 nm. A nano-filtration membrane preferably has a pore size of approximately 1 nm to 5 nm and an ultra-filtration membrane preferably has a pore size of approximately 5 to 50 nm, whereas a micro-filtration membrane has a pore size approximately from 50 to 1000 nm.

The liquid activating agent used in the present invention preferably has a pH value of from 1 to 6. In a preferred embodiment the pH value of the liquid activating agent is of from 1 to 5, even more preferred of from 1 to 4 and in a most preferred embodiment of from 2 to 3.

The acid used in the present invention is not limited. In a preferred embodiment, the acid is selected from inorganic acids, organic acids or mixtures thereof. Preferably, the organic acid is selected from the group consisting of citric acid, adipic acid, succinic acid, glutaric acid, lactic acid, maleic acid or mixtures thereof. As inorganic acids sulfuric acid, phosphoric acid or hydrochloric acid or mixtures thereof can be used.

The surfactant present in the liquid activating agent of the present invention preferably is selected from the group consisting of anionic surfactants, nonionic surfactants, amphoteric surfactants or mixtures thereof. In case the surfactant is an anionic surfactant, the anionic surfactant preferably is selected from the group consisting of alkyl sulfates, alky sulfonates, alkylether sulfates, alkylether sulfonates, alkyl aryl sulfates, alkyl aryl sulfonates, aryl sulfates, aryl sulfonates, sulfated fatty acid esters or mixtures thereof. In a most preferred embodiment the anionic surfactant is an alkyl benzyl sulfonate, whereby the alkyl group preferably has of from 1 to 15, even more preferred of from 8 to 14 and most preferred of from 10 to 13 carbon atoms. The afore mentioned alkyl group preferably is an n-alkyl group.

Preferably, the liquid activating agent comprises of from 0.01 to 10 wt.-% surfactant based on the total amount of activating agent. In a more preferred embodiment the amount of surfactant present in the liquid activating agent is of from 0.02 to 5 wt.-%, preferably 0.03 to 2 wt.-% and most preferred 0.04 to 1 wt.-%.

The liquid activating agent preferably comprises of from 0.01 to 10 wt.-% acid based on the total amount of activating agent. Preferably, the amount of acid present in the activating agent is of from 0.02 to 5 wt.-%, even more preferred of from 0.03 to 2 wt.-%, even more preferred of from 0.05 to 1 wt.-%.

In a preferred embodiment the membrane is contacted with the liquid activating agent for a least one day, even more preferred for at least three days, preferably for at least four days and most preferred for at least five days. In a further preferred embodiment the contacting time is preferably at least six days, even more preferred at least one week, most preferred at least two weeks, preferably at least three weeks and even more preferred at least one month. Alternatively, the membrane can be contacted with a liquid activating agent for at least three months, preferably for at least four months and most preferred for at least five months.

The treatment of the membrane with the liquid activating agent leads to a modified membrane being preferably a chemically modified membrane. The membrane obtained is preferably used for the treatment of waste water preferably being waste water from a washing process. Such a membrane can be a reverse osmosis membrane used in a reverse osmosis device for cleaning waste water, preferably produced by washing machines, such as institutional washing machines.

When such an activated membrane, like an activated reverse osmosis membrane is used for the treatment of waste water, the time in which the activated membrane has to be cleaned due to deposits present on the membrane is longer compared with a membrane which has not been activated. Moreover, when an activated membrane has been cleaned by a method known to a person skilled in the art, the performance of the cleaned membrane after cleaning is higher compared with a cleaned membrane which has not been treated. This results in a more efficient and economic separation process. As a last point the dwelling time of an activated membrane is longer than the one of an untreated membrane. Since the dwelling time is significantly longer and due to the higher performance being a result thereof, such an activated membrane can be used longer in separation processes compared with untreated membranes.

Surprisingly, a used membrane, which was not treated with the activating agent of the present invention prior to its use has a significantly higher performance when treated with the method according to the present invention. Therefore, not only unused membranes can be treated with the method according to the present invention. Surprisingly it is possible to treat used membranes, whereby the performance of said used membranes is enhanced significantly, compared with membranes not being treated with the method of the present invention.

Furthermore, it was very surprising that the effect of detergents used in the washing processes, especially in institutional washing processes on the performance of the membranes which are preferably reverse osmosis membranes has been decreased.

The technical effect of the present invention is explained in more detail in the following example:

### Example

A fully aromatic polyamide composite reverse osmosis membrane was treated for two months with an aqueous activating agent comprising 0.1 wt. % citric acid, 0.11 wt. % lactic acid and 0.05 C₁₀ - ₁₃ n-alkyl benzene sulphonic acid (whereby the balance is water). The afore mentioned liquid activating agent had a pH value of 2.6 and the reverse osmosis membrane was treated with the liquid activating agent at a temperature of 25 °C.

The activated reverse osmosis membrane as well as an untreated reverse osmosis membrane (same as the activated reverse osmosis membrane before treatment with the activating liquid) were installed in a reverse osmosis unit for recycling waste water obtained by an institutional washing machine. The permeate flux which is the amount of cleaned waste water having passed the reverse osmosis membrane was measured over a period of time of five days. The permeate flux of both membranes obtained was normalized on the permeate flux measured with clean tap water (100%) at the beginning of the test. The performance of the membranes was recorded over five days and the result can be seen in diagram 1.

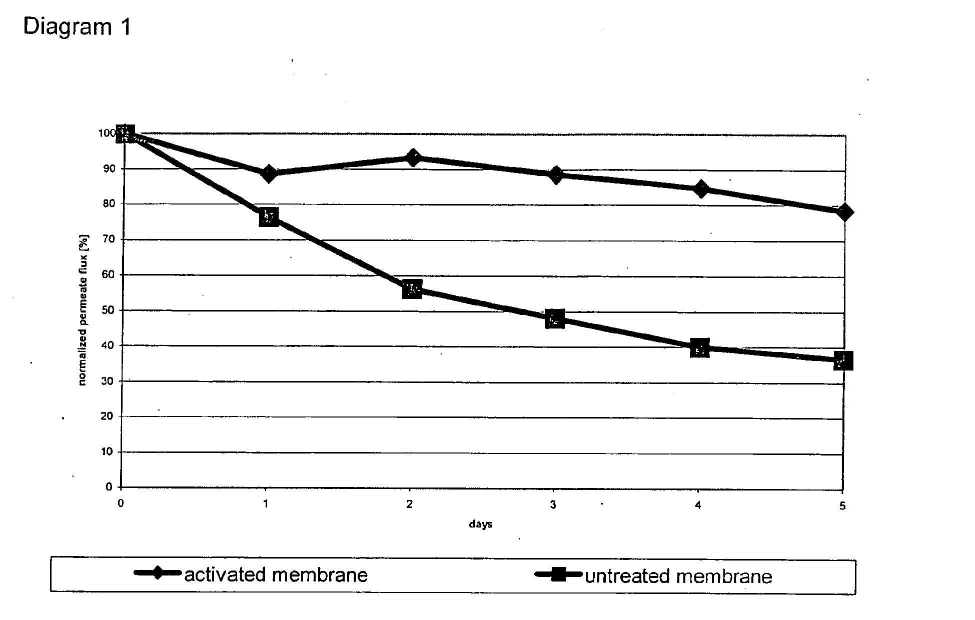

After five days the membranes have been cleaned using an acidic cleaning composition and afterwards an alkaline cleaning step. Said cleaning steps took 30 minutes. After said cleaning steps the permeate flux with tap water was measured again. The permeate flux for a cleaned membrane which has been activated was 70%, whereas the permeate flux of an untreated membrane was 35%.

First of all it can be seen that the permeate flux at the beginning of the test which represents the performance of the membrane is slightly higher for the activated membrane. Additionally it can be seen that after the membranes have been used for five days the cleaning process is more efficient for the activated membrane (higher permeate flux). The permeate flux of the untreated reverse osmosis membrane decreases over said test period constantly, whereas the permeate flux of the activated reverse osmosis membrane decreases less. After five days the efficiency of the activated membrane is 78%, whereas the untreated membrane has an efficiency of 37% compared with the efficiency at the beginning of the test (quotient of permeate flux with waste water at the beginning with permeate flux after five days).

Moreover, the performance of the cleaned activated reverse osmosis membrane is 70 % compared with the performance of the unused activated reverse osmosis membrane. In contrast thereto the reverse osmosis membrane of the state of the art has a reduced performance after said cleaning step. After cleaning the permeate flux measured with tap water was significantly lower at 37%. As a consequence the untreated reverse osmosis membrane has to be changed earlier compared to the activated reverse osmosis membrane.

It is apparent to a person skilled in the art that the membranes obtained are superior compared with membranes of the state of the art. The separation performance as well as the dwelling time are significantly increased, whereas the cleaning cycles are reduced significantly. In summary the activated membranes lead to a more economic and more efficient process for cleaning waste water.

## Claims

1. Use of a liquid activating agent comprising at least one acid and at least one surfactant for the activation of separation membranes, whereby the drop of performance per time of the membrane when used is reduced and the membrane is contacted for at least one day with the liquid activating agent

2. Use according to claim 1, **characterized in that** the membrane is a micro-filtration membrane, an ultra-filtration membrane, a nano-filtration membrane or a reverse osmosis membrane.

3. Use according to claims 1 or 2, **characterized in that** the membrane has pore sizes of from 0,01 nm to 1000 nm.

4. Use according to any of the claims 1 to 3, **characterized in that** the liquid activating agent is an aqueous liquid activating agent having a pH-value of from 1 to 6.

5. Use according to any of the claims 1 to 4, **characterized in that** the acid is selected from inorganic acids, organic acids or mixtures thereof.

6. Use according to claim 5, **characterized in that** the organic acid is selected from the group consisting of citric acid, adipic acid, succinic acid, glutaric acid, lactic acid, maleic acid, or mixtures thereof.

7. Use according to claim 5, **characterized in that** the inorganic acid is selected from the group consisting of sulfuric acid, phosphoric acid, hydrochloric acid or mixtures thereof.

8. Use according to any of the claims 1 to 7, **characterized in that** the surfactant is selected from the group consisting of anionic surfactants, cationic surfactants, nonionic surfactants, amphoteric surfactants or mixtures thereof.

9. Use according to claim 8, **characterized in that** the anionic surfactant is selected from the group consisting of alkyl sulfates, alkyl sulfonates, alkylether sulfates, alkylether sulfonates, alkyl aryl sulfates, alkyl aryl sulfonates, aryl sulfates, aryl sulfonates, sulfated fatty acid esters or mixtures thereof.

10. Use according to any of the claims 1 to 9, **characterized in that** the liquid activating agent comprises of from 0,01 to 10 wt.-% acid based on the total amount of activating agent.

11. Use according to any of the claims 1 to 10, **characterized in that** the liquid activating agent comprises of from 0,01 to 10 wt.-% surfactant based on the total amount of activating agent.

12. Use according to any of the claims 1 to 11, **characterized in that** the membrane is contacted with the liquid activating agent for at least three days.

## Patentansprüche

1. Verwendung eines flüssigen Aktivierungsmittels, umfassend wenigstens eine Säure und wenigstens ein Tensid zur Aktivierung von Trennmembranen, wodurch die Abnahme der Membranleistung je Zeiteinheit während des Gebrauchs verringert wird, und die Membran für wenigstens einen Tag mit dem flüssigen Aktivierungsmittel in Kontakt ist.

2. Verwendung nach Anspruch 1, **dadurch gekennzeichnet, dass** die Membran eine Mikrofiltrationsmembran, eine Ultrafiltrationsmembran, eine Nanofiltrationsmembran oder eine Umkehrosmose-Membran ist.

3. Verwendung nach Anspruch 1 oder 2, **dadurch gekennzeichnet, dass** die Membran Porengrößen von 0,01 nm bis 1000 nm aufweist.

4. Verwendung nach einem der Ansprüche 1 bis 3, **dadurch gekennzeichnet, dass** das flüssige Aktivierungsmittel ein wässriges flüssiges Aktivierungsmittel ist, aufweisend einen pH-Wert von 1 bis 6.

5. Verwendung nach einem der Ansprüche 1 bis 4, **dadurch gekennzeichnet,. dass** die Säure ausgewählt wird unter anorganischen Säuren, organischen Säuren oder Mischungen davon.

6. Verwendung nach Anspruch 5, **dadurch gekennzeichnet, dass** die organische Säure ausgewählt wird aus der Gruppe bestehend aus Citronensäure, Adipinsäure, Bernsteinsäure, Glutarsäure, Milchsäure, Maleinsäure oder Mischungen davon.

7. Verwendung nach Anspruch 5, **dadurch gekennzeichnet, dass** die anorganische Säure ausgewählt wird aus der Gruppe bestehend aus Schwefelsäure, Phosphorsäure, Chlorwasserstoffsäure oder Mischungen davon.

8. Verwendung nach einem der Ansprüche 1 bis 7, **dadurch gekennzeichnet, dass** das Tensid ausgewählt wird aus der Gruppe bestehend aus anionischen Tensiden, kationischen Tensiden, nichtionischen Tensiden, amphoteren Tensiden oder Mischungen davon.

9. Verwendung nach Anspruch 8, **dadurch gekennzeichnet, dass** das anionische Tensid ausgewählt wird aus der Gruppe bestehend aus Alkylsulfaten, Alkylsulfonaten, Alkylethersulfaten, Alkylethersulfonaten, Alkylarylsulfaten, Alkylarylsulfonaten, Arylsulfaten, Arylsulfonaten, sulfatierten Fettsäureestern oder Mischungen davon.

10. Verwendung nach einem der Ansprüche 1 bis 9, **dadurch gekennzeichnet, dass** das flüssige Aktivierungsmittel 0,01 bis 10 Gew.-% an Säure umfasst, bezogen auf die Gesamtmenge an Aktivierungsmittel.

11. Verwendung nach einem der Ansprüche 1 bis 10, **dadurch gekennzeichnet, dass** das flüssige Aktivierungsmittel 0,01 bis 10 Gew.-% an Tensid umfasst, bezogen auf die Gesamtmenge an Aktivierungsmittel.

12. Verwendung nach einem der Ansprüche 1 bis 11, **dadurch gekennzeichnet, dass** die Membran für wenigstens drei Tage mit dem flüssigen Aktivierungsmittel in Kontakt ist.

## Revendications

1. Utilisation d'un agent activant liquide, comprenant au moins un acide et au moins un tensioactif pour l'activation de membranes de séparation, dans laquelle la baisse de performance par unité de temps de la membrane lorsqu'elle est utilisée est réduite et la membrane est mise en contact pendant au moins un jour avec l'agent activant liquide.

2. Utilisation selon la revendication 1, **caractérisée en ce que** la membrane est une membrane de microfiltration, une membrane d'ultrafiltration, une membrane de nanofiltration ou une membrane d'osmose inverse.

3. Utilisation selon les revendications 1 ou 2, **caractérisée en ce que** la membrane a une taille de pores de 0,01 nm à 1 000 nm.

4. Utilisation selon l'une quelconque des revendications 1 à 3, **caractérisée en ce que** l'agent activant liquide est un agent activant liquide aqueux ayant un pH de 1 à 6.

5. Utilisation selon l'une quelconque des revendications 1 à 4, **caractérisée en ce que** l'acide est choisi parmi les acides inorganiques, les acides organiques ou leurs mélanges.

6. Utilisation selon la revendication 5, **caractérisée en ce que** l'acide organique est choisi dans le groupe comprenant l'acide citrique, l'acide adipique, l'acide succinique, l'acide glutarique, l'acide maléique ou leurs mélanges.

7. Utilisation selon la revendication 5, **caractérisée en ce que** l'acide inorganique est choisi dans le groupe comprenant l'acide sulfurique, l'acide phosphorique, l'acide chlorhydrique ou leurs mélanges.

8. Utilisation selon l'une quelconque des revendications 1 à 7, **caractérisée en ce que** le tensioactif est choisi dans le groupe comprenant les tensioactifs anioniques, les tensioactifs cationiques, les tensioactifs non ioniques, les tensioactifs amphotères ou leurs mélanges.

9. Utilisation selon la revendication 8, **caractérisée en ce que** le tensioactif anionique est choisi dans le groupe comprenant les alkyl-sulfates, les alkyl-sulfonates, les alkyléther-sulfates, les alkyléther-sulfonates, les alkylarylsulfates, les alkylaryl-sulfonates, les aryl-sulfates, les aryl-sulfonates, les esters d'acide gras sulfatés ou leurs mélanges.

10. utilisation selon l'une quelconque des revendications 1 à 9, **caractérisée en ce que** l'agent activant liquide comprend de 0,01 à 10 % en poids d'acide sur la base de la quantité totale d'agent activant.

11. Utilisation selon l'une quelconque des revendications 1 à 10, **caractérisée en ce que** l'agent activant liquide comprend de 0,01 à 10 % en poids de tensioactif sur la base de quantité totale d'agent activant.

12. Utilisation selon l'une quelconque des revendications 1 à 11, **caractérisée en ce que** la membrane est mise en contact avec l'agent activant liquide pendant au moins trois jours.
